# EUROPEAN PATENT APPLICATION

(11) **EP 4 054 142 A1**
(43) Date of publication of application: **07.09.2022**
(21) Application number: 20893664.1
(22) Date of filing: 23.11.2020
(51) Int. Cl.: H04L 29/06, H04W 8/08

(54) **CALL PROCESSING SYSTEM, CALL PROCESSING METHOD, AND COMMUNICATION DEVICE**

(30) Priority: 30.11.2019 CN 201911208927
(71) Applicant: Huawei Technologies Co., Ltd., Shenzhen, Guangdong 518129 (CN)
(72) Inventor: YE, Jinzhou, Shenzhen, Guangdong 518129, (CN)
(74) Representative: MERH-IP Matias Erny Reichl Hoffmann Patentanwälte PartG mbB
(86) International application number: PCT/CN2020/130790
(87) International publication number: WO 2021/104198

(57) **Abstract**

This application provides a call processing system, a call processing method, and a communications apparatus. The system includes a call processing device and an event manager. The call processing device is configured to perform a connection and routing processing for a call initiated by calling user equipment, and is further configured to perform event detection for the call to obtain a detected event set, and report the detected event set to the event manager. The detected event set requests to trigger an update processing for the call. The event manager is configured to manage the update processing for the call based on the detected event set reported by the call processing device. In this application, a basic call function is separated and used as a call processing device to implement a simplified 2B industry audio/video framework, and a use requirement of a current 2B application scenario can be met, so that a 2B application can be rapidly deployed.

## Description

This application claims priority to Chinese Patent Application No. 201911208927.3, filed with the China National Intellectual Property Administration on November 30, 2019 and entitled "CALL PROCESSING SYSTEM, CALL PROCESSING METHOD, AND COMMUNICATIONS APPARATUS", which is incorporated herein by reference in its entirety.

### TECHNICAL FIELD

This application relates to the field of communications technologies, and in particular, to a call processing system, a call processing method, and a communications apparatus.

### BACKGROUND

To meet multimedia communications requirements, the 3rd Generation Partnership Project (3rd generation partnership project, 3GPP) organization introduces an IP multimedia subsystem (IP multimedia subsystem, IMS) on the basis of an original packet bearer network. The IMS can provide users with not only conventional voice services but also rich multimedia experience.

With evolution of the fifth-generation mobile communications technology (the 5th generation mobile communication technology, 5G), 5G voice services (voice over new radio, VoNR) have received more and more attention. One of main requirements on VoNR comes from a to-business (to-business, 2B) application. An existing IMS system architecture can no longer meet a use requirement of a current 2B application scenario, and this is not conducive to rapid deployment of a 2B application.

### SUMMARY

This application provides a call processing system, a call processing method, and a communications apparatus, which can meet a use requirement of a current 2B application scenario, so that a 2B application can be rapidly deployed.

According to a first aspect, a call processing system is provided. The system includes a call processing device and an event manager. The call processing device is configured to perform a connection and routing processing for a call initiated by calling user equipment, and is further configured to perform event detection for the call to obtain a detected event set, and report the detected event set to the event manager. The detected event set requests to trigger an update processing for the call. The event manager is configured to manage the update processing for the call based on the detected event set reported by the call processing device.

According to the call processing system provided in this application, the call processing device retains a "minimum core" of a basic audio/video call function, and can be configured to perform a connection and routing processing for the call initiated by the calling UE. In addition, the call processing device is further configured to perform event detection for the call to obtain a detected event set, and report the detected event set to the event manager, so that the event manager manages the corresponding update processing.

According to the call processing system provided in this application, a use requirement of a current 2B application scenario can be met, so that a 2B application can be rapidly deployed. Specifically, in this application, the basic call "minimum core" is separated and used as the call processing device to implement a simplified audio/video framework for the 2B industry. In this way, a 2B application can be rapidly deployed, thereby saving an unnecessary virtual machine and also enhancing a security capability by using zero data configuration. In this application, a trigger mechanism is used for the update processing for the call. In addition, the event manager manages the related update processing, so that a basic call is directly provided by the call processing device without triggering. In this way, occupancy and overheads of supplementary service resources are reduced by 95%, deployment flexibility and a rapid deployment capability are improved, and energy consumption is reduced.

Optionally, the detected event set may comprise an event of a 2B type. To be specific, the call processing device may detect an event of the 2B type, and report the detected event of the 2B type to a 2B event manager.

Optionally, the detected event set may comprise a to-customer (to-customer, 2C) event. To be specific, the call processing device may detect an event of the 2C type, and report the detected event of the 2C type to a 2C event manager.

In the embodiments of this application, the call processing device can further perform event detection for the current call to obtain a detected event set, and report the detected event set to the event manager. Performing event detection for the current call may be detecting an event in any process of the call, or may be detecting an event related to the current call after the current call is completed.

For example, the detection may be performed before basic call setup is completed, or may be performed between completion of basic call setup and notifying called UE to ring, or may be performed during the call, or may be performed after completion (on-hook) of the call. This is not limited in this application.

In the embodiments of this application, the detected event set requests to trigger an update processing for the call. Specifically, "an update processing for the call" in the embodiments of this application may be understood as performing an update (update) to a service that is based on a status or a processing procedure of the call, or performing an update to a session of the call. Herein, the update processing is a processing other than the connection and routing processing. Therefore, in this application, "request to trigger the update processing for the call" may also be understood as "request to trigger a supplementary service for the call" in some cases.

Optionally, the update processing for the call may be a single update processing, or may be plural update processings. That is, triggering of a single update processing or plural update processings for the call may be requested based on the detected event set.

Optionally, triggering of a single update processing may be requested by one event.

Optionally, triggering of a single update processing may be requested by a plurality of events.

After detecting an event set, the call processing device may report the detected event set to the event manager. A type of interface used for reporting is not limited in this application. The call processing device may report a signaling-plane event and a media-plane event through a same interface or different interfaces.

Optionally, the detected event set may be reported through a SIP interface.

Optionally, the detected event set may be reported through a non-SIP (Non-SIP) interface.

For example, the call processing device may report a detected signaling-plane event to the event manager through an event report interface 1 (an interface EventReportInt1). The call processing device may report a detected media-plane event to the event manager through an event report interface 2 (an interface EventReportInt2).

Further, the event manager is configured to receive the detected event set, and based on the detected event set, manage the update processing for the call, for example, triggering an update processing, preventing an update processing from being triggered (or blocking an update processing), determining an application server for providing a service for an update processing, providing queue management for plural update processings, and the like. This is not limited in this application.

With reference to the first aspect, in some implementations of the first aspect, the event manager is specifically configured to: determine, based on the detected event set, an application server (application server, AS) for providing a service for the update processing for the call.

Specifically, the detected event set can be used to request to trigger the update processing for the call. After determining to trigger the update processing, the event manager may determine the application server for providing the service for the update processing. In this case, the event manager may report a trigger instruction to the application server. The trigger instruction includes a parameter set related to the detected event set.

Optionally, the application server may be a third-party application server deployed by an enterprise (such as an enterprise in the food delivery or taxi industry).

Optionally, the application server may be an MMTEL server deployed by an operator.

With reference to the first aspect, in some implementations of the first aspect, the event manager is specifically configured to: obtain information about a subscription relationship between the application server and an event; and determine, based on the detected event set and the information about a subscription relationship, the application server for providing the service for the update processing for the call.

Specifically, the subscription relationship can reflect which application server has subscribed to a specific event, and can reflect a correspondence between an event and an application server. Optionally, the subscription relationship may be defined by an enterprise and stored locally.

The event manager can determine, based on the detected event set and the subscription relationship, which servers have (or which server has) subscribed to the detected event set, and determine one or more servers therefrom to provide the service for the update processing.

Optionally, if the event manager finds, by querying the subscription relationship, that only one AS has subscribed to the detected event set, the event manager may select the only one AS to provide the service for the update processing.

Optionally, if the event manager finds, by querying the subscription relationship, that a plurality of ASs have subscribed to the detected event set, the event manager may select one or more ASs therefrom to provide the service for the update processing.

For example, an AS with a highest priority may be selected to provide the service for the update processing.

Optionally, in another embodiment, if the event manager finds, by querying the subscription relationship, that no AS has subscribed to the detected event set, the event manager may choose not to trigger the update processing in this case.

Optionally, triggering of a single update processing may alternatively be requested by a plurality of events. In this case, the application server for providing the service for the update processing may be determined by using a logical combination of the plurality of events and the information about a subscription relationship.

Based on an existing IMS framework, this application further provides a more flexible service trigger mechanism, to break through a limitation that only IFC Invite is based on a static service provisioning mechanism in an existing IMS, so that a third-party application server can randomly define its own service without using an operator's BSS provisioning system, and event processing logic is decoupled, thereby ensuring independence and flexibility of a third-party application server for 2B. Event subscription and service logic belong entirely to an enterprise itself, ensuring privacy and security of enterprise data and services.

According to the embodiments of this application, the more flexible loosely-coupled trigger mechanism is provided to facilitate service definition by an industry enterprise and flexible plug-in and plug-out; and the multi-event management trigger mechanism is further provided, so that various signaling and media events except Invite can be flexibly programmed and customized to eliminate a limitation of static subscription and change static IFC subscription to flexible subscription-based triggering of events, including signaling events and media events, thereby facilitating rapid and flexible deployment of a 2B application.

Optionally, the event manager in this application may further provide a queue management mechanism, to perform queue management on a plurality of reported events, thereby performing a better update processing for the call.

With reference to the first aspect, in some implementations of the first aspect, the event manager is specifically configured to perform blocking management on the detected event set based on a locally stored blocking policy.

Specifically, a blocking operation may be performed on the detected event set based on the locally stored blocking policy. For example, a specific event may be blocked so that no update processing that the event requests to trigger is triggered, that is, a trigger instruction may not be reported to the application server in this case. With the foregoing settings, better management can be performed on the update processing for the call, and secure-use performance of the entire call processing system can be improved.

With reference to the first aspect, in some implementations of the first aspect, the event manager is specifically configured to: generate a trigger instruction based on the detected event set, and send the trigger instruction to the application server; receive a processing result fed back by the application server, where the processing result is generated by the application server based on the trigger instruction; and manage the processing result.

Managing the processing result by the event manager in this application may be reviewing the processing result to determine whether the processing result meets a requirement, and when the requirement is met, forwarding the processing result to the call processing device to trigger the corresponding update processing. If it is determined that the requirement is not met (that is, the processing result is improper), the processing result may not be forwarded to the call processing device in this case, to block the update processing (or prevent the update processing from being triggered).

Optionally, the processing result may be a "direct" result (for example, for number display modification, the result may be directly a modified number), or may be an invoking interface API or an executable script. This is not limited in this application.

With reference to the first aspect, in some implementations of the first aspect, the call processing device is further configured to: obtain definition information of an event; and detect the event based on the definition information.

For example, the call processing device may belong to a network operator, and the event set detected by the call processing device may be defined by the network operator.

With reference to the first aspect, in some implementations of the first aspect, the call processing device is specifically configured to perform the update processing for the call by using an in-call modification method and/or a re-invite method.

With reference to the first aspect, in some implementations of the first aspect, the update processing for the call includes at least one of the following processings: number display modification, call direction modification, media path modification, media encoding/decoding type modification, and the like.

Optionally, the detected event set may include a signaling-plane event and/or a media-plane event. In other words, the call processing device can further perform signaling-plane event detection and/or media-plane event detection for the current call. How the call processing device detects an event is not limited in the embodiments of this application.

For example, for the signaling-plane event detection, the call processing device may determine, by detecting reception or transmission of a specific piece of signaling, that an event is detected.

For another example, for the media-plane event detection, the call processing device may determine, by detecting a specific piece of media information, that an event is detected.

For another example, the call processing device may determine, by using a change of a call status, that an event is detected.

According to a second aspect, a call processing method is provided. The method may be performed by a session border controller (SBC) or may be performed by a chip in an SBC. The method includes: a calling-side session border controller (SBC) receives a first call request message sent by calling user equipment (UE); the calling-side SBC sends a first routing request message to a user database server, where the first routing request message requests an identifier (ID) and an internet protocol (IP) address of the calling UE, and requests an ID and an IP address of called UE; the calling-side SBC receives a first routing response message sent by the user database server, where the first routing response message carries a first ID, a first IP address, a second ID, and a second IP address, and the first ID is the ID of the calling UE, the first IP address is the IP address of the calling UE, the second ID is the ID of the called UE, and the second IP address is the IP address of the called UE; and the calling-side SBC sends a second call request message to a call processing device, where the second call request message carries the first ID, the first IP address, the second ID, and the second IP address.

With reference to the second aspect, in some implementations of the second aspect, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

The second call request message in this application carries the IDs and the IP addresses of the calling UE and the called UE, and the IDs and the IP addresses may be real or anonymous. In this application, hop-by-hop routing based on calling and called numbers in a conventional technology is replaced with IP-based and ID-based routing provided by a data owner, so that user data ownership can be ensured, and the call processing device cannot learn privacy data of a user, thereby protecting user privacy. In addition, a difference based on different operators can be masked, that is, a difference between encoding schemes of the operators can be totally masked, and more general IP-based routing and unified ID-based virtual routing can be used instead. Moreover, a data value of an HSS is also enhanced.

With reference to the second aspect, in some implementations of the second aspect, the first routing response message further carries first indication information, where the first indication information indicates whether the first ID and the second ID are real IDs or anonymous IDs, and indicates whether the first IP address and the second IP address are real IP addresses or anonymous IP addresses. With the foregoing settings, the calling-side SBC can be prevented from a logic confusion, and routing decision-making by the calling-side SBC can be facilitated.

With reference to the second aspect, in some implementations of the second aspect, the method further includes: the call processing device sends a third call request message to a called-side SBC based on the second ID or the second IP address, where the third call request message carries the first ID, the first IP address, the second ID, and the second IP address.

With reference to the second aspect, in some implementations of the second aspect, the method further includes: the call processing device performs event detection for a current call to obtain a first event set, where the first event set includes at least one event, and the first event set requests to trigger an update processing for the call; the call processing device sends the first event set to an event manager; the call processing device receives a processing result sent by the manager; and the call processing device performs the update processing for the call based on the processing result.

According to a third aspect, a call processing method is provided. The method may be performed by a user database server or may be performed by a chip in a user database server. The method includes: the user database server receives a first routing request message sent by a calling-side session border controller (SBC), where the first routing request messagerequests an identifier (ID) and an internet protocol (IP) address of the callinguser equipment (UE), and requests an ID and an IP address of called UE; the user database server determines a first ID, a first IP address, a second ID, and a second IP address, where the first ID is the ID of the calling UE, the first IP address is the IP address of the calling UE, the second ID is the ID of the called UE, and the second IP address is the IP address of the called UE; and the user database server sends a first routing response message to the calling-side SBC, where the first routing response message carries the first ID, the first IP address, the second ID, and the second IP address.

With reference to the third aspect, in some implementations of the third aspect, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

With reference to the third aspect, in some implementations of the third aspect, the first routing response message further carries first indication information, where the first indication information indicates whether the first ID and the second ID are real IDs or anonymous IDs, and ndicates whether the first IP address and the second IP address are real IP addresses or anonymous IP addresses.

According to a fourth aspect, a communications apparatus is provided. The apparatus includes: a receiving unit, configured to receive a first call request message sent by calling user equipment (UE); and a sending unit, configured to send a first routing request message to a user database server, where the first routing request message requests an identifier (ID) and an internet protocol (IP) address of the calling UE, and requests an ID and an IP address of called UE. The receiving unit is configured to receive a first routing response message sent by the user database server, where the first routing response message carries a first ID, a first IP address, a second ID, and a second IP address, where the first ID is the ID of the calling UE, the first IP address is the IP address of the calling UE, the second ID is the ID of the called UE, and the second IP address is the IP address of the called UE. The sending unit is further configured to send a second call request message to a call processing device, where the second call request message carries the first ID, the first IP address, the second ID, and the second IP address.

With reference to the fourth aspect, in some implementations of the fourth aspect, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

With reference to the fourth aspect, in some implementations of the fourth aspect, the first routing response message further carries first indication information, where the first indication information indicates whether the first ID and the second ID are real IDs or anonymous IDs, and indicates whether the first IP address and the second IP address are real IP addresses or anonymous IP addresses.

According to a fifth aspect, a communications apparatus is provided. The apparatus includes: a receiving unit, configured to receive a first routing request message sent by a calling-side session border controller (SBC), where the first routing request message requests an identifier (ID) and an internet protocol (IP) address of the calling user equipment (UE), and requests an ID and an IP address of called UE; a processing unit, configured to determine a first ID, a first IP address, a second ID, and a second IP address, where the first ID is the ID of the calling UE, the first IP address is the IP address of the calling UE, the second ID is the ID of the called UE, and the second IP address is the IP address of the called UE; and a sending unit, configured to send a first routing response message to the calling-side SBC, where the first routing response message carries the first ID, the first IP address, the second ID, and the second IP address.

With reference to the fifth aspect, in some implementations of the fifth aspect, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

With reference to the fifth aspect, in some implementations of the fifth aspect, the first routing response message further carries first indication information, where the first indication information indicates whether the first ID and the second ID are real IDs or anonymous IDs, and indicates whether the first IP address and the second IP address are real IP addresses or anonymous IP addresses.

According to a sixth aspect, a communications apparatus is provided. The apparatus may be a session border controller (SBC) or may be a chip in an SBC. The apparatus may include a processing unit and a transceiver unit. When the apparatus is an SBC, the processing unit may be a processor, and the transceiver unit may be a transceiver. The SBC may further include a storage unit. The storage unit may be a memory. The storage unit is configured to store instructions. The processing unit executes the instructions stored in the storage unit, so that the communications apparatus performs the method in the second aspect. When the apparatus is a chip in an SBC, the processing unit may be a processor, and the transceiver unit may be an input/output interface, a pin, a circuit, or the like. The processing unit executes instructions stored in a storage unit, so that the communications apparatus performs the method in the second aspect. The storage unit may be a storage unit (for example, a register or a buffer) in the chip, or may be a storage unit (for example, a read-only memory or a random access memory) that is in the communications apparatus and that is located outside the chip.

According to a seventh aspect, a communications apparatus is provided. The apparatus may be a user database server (for example, a home subscriber server (HSS)) or a chip in a user database server (for example, an HSS). The apparatus may include a processing unit and a transceiver unit. When the apparatus is a user database server, the processing unit may be a processor, and the transceiver unit may be a transceiver. The user database server may further include a storage unit. The storage unit may be a memory. The storage unit is configured to store instructions. The processing unit executes the instructions stored in the storage unit, so that the communications apparatus performs the method in the third aspect. When the apparatus is a chip in a user database server, the processing unit may be a processor, and the transceiver unit may be an input/output interface, a pin, a circuit, or the like. The processing unit executes instructions stored in a storage unit, so that the communications apparatus performs the method in the third aspect. The storage unit may be a storage unit (for example, a register or a buffer) in the chip, or may be a storage unit (for example, a read-only memory or a random access memory) that is in the communications apparatus and that is located outside the chip.

According to an eighth aspect, a communications apparatus is provided, including at least one processor. The at least one processor is coupled to a memory, and reads and executes instructions in the memory to implement any method in the second aspect or the third aspect.

Optionally, the communications apparatus further includes the memory.

According to a ninth aspect, a computer program product is provided. The computer program product includes computer program code. When the computer program code is run on a computer, the computer is enabled to perform the method in the foregoing second aspect or third aspect.

It can be noted that the foregoing computer program code may be completely or partially stored in a first storage medium, where the first storage medium may be packaged with a processor or packaged separately from the processor. This is not specifically limited in this application.

According to a tenth aspect, a computer-readable medium is provided. The computer-readable medium stores program code. When the program code is run on a computer, the computer is enabled to perform the method in the second aspect or the third aspect.

According to an eleventh aspect, a chip system is provided, including a processor. The processor is configured to invoke and run a computer program from a memory, so that a communications device on which the chip system is installed performs the method in the second aspect or the third aspect.

### BRIEF DESCRIPTION OF DRAWINGS

FIG. 1 is a schematic diagram of a basic architecture of an IMS network system in a conventional technology;
FIG. 2 is a schematic diagram of a system architecture of an example of a call processing system according to an embodiment of this application;
FIG. 3 is a schematic diagram of a system architecture of another example of a call processing system according to an embodiment of this application;
FIG. 4 is a schematic flowchart of an example of a call processing method according to an embodiment of this application;
FIG. 5 is a schematic flowchart of another example of a call processing method according to an embodiment of this application;
FIG. 6 is a schematic flowchart of still another example of a call processing method according to an embodiment of this application;
FIG. 7 is a schematic flowchart of yet another example of a call processing method according to an embodiment of this application;
FIG. 8 is a schematic block diagram of an example of a communications apparatus according to an embodiment of this application;
FIG. 9 is a schematic diagram of a structure of a session border controller according to an embodiment of this application;
FIG. 10 is a schematic block diagram of another example of a communications apparatus according to an embodiment of this application; and
FIG. 11 is a schematic diagram of a structure of a user database server according to an embodiment of this application.

### DESCRIPTION OF EMBODIMENTS

To make the to-be-resolved technical problems, technical solutions, and advantages of this application clearer, the following provides a detailed description with reference to accompanying drawings and specific embodiments.

The terms "first", "second", and the like in the specification and claims of this application are used to distinguish between different objects, but not to describe a particular order. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

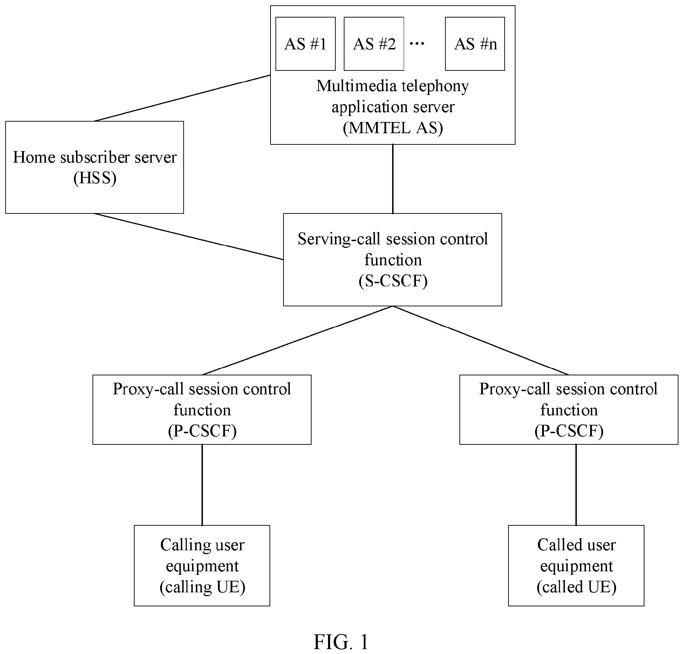

Before a call processing system provided in the embodiments of this application is described, a basic architecture of an IMS network system in a conventional technology is first described with reference to an accompanying drawing. FIG. 1 is a schematic diagram of a basic architecture of an IMS network system in a conventional technology. Some network element functions are as follows.

User equipment (user equipment, UE): includes calling user equipment (also referred to as calling UE or a caller) and called user equipment (also referred to as called UE or a callee). The calling UE is configured to initiate a telephone call to the called UE, and the called UE is configured to receive the call from the calling UE.

Call session control function (call session control function, CSCF): A CSCF is a session control functionality in the IMS. The CSCF implements a main softswitch control function in a multimedia call in the IMS. The CSCF may be further classified into a proxy-call session control function (proxy-call session control function, P-CSCF), an interrogating-call session control function (interrogating-call session control function, I-CSCF), and a serving-call session control function (serving-call session control function, S-CSCF).

P-CSCF: may be located in an access network currently accommodating UE, serves as the first contact network element for the UE to access the IMS network, forwards a session initiation protocol (session initiation protocol, SIP) message of the UE to an IMS core network, and forwards a received SIP message to the UE.

S-CSCF: serves as a core call session control function to implement a basic call control function. The S-CSCF performs a processing on basically any SIP message, such as routing, application server (application server, AS) service triggering, redirection, and another main control function.

Multimedia telephony (multimedia telephony, MMTEL) AS: An MMTEL AS is configured to provide a user with various services, such as basic voice and video call services and various supplementary services, and is a server for implementing a specific service. The MMTEL AS is usually triggered by an S-CSCF based on a user request and a trigger condition.

The 3GPP defines basic specifications for MMTEL services. In addition to the basic voice call service, the MMTEL includes more than 20 supplementary services, such as a personalized ring back tone service, a call transfer service, and a voicemail service. For a current IMS mechanism, the foregoing more than 20 MMTEL services including the basic voice call service are usually provided as a whole.

In other words, because the MMTEL may include a plurality of services (for example, the more than 20 existing services), there may be a plurality of corresponding ASs. For example, FIG. 1 includes a total of n (n is an integer greater than two) ASs, and each AS is configured to provide a different MMTEL service.

Home subscriber server (home subscriber server, HSS): An HSS records user information and service data of each IMS user, completes a routing function in cooperation with the S-CSCF, and provides functions such as authentication and authorization. The user's subscription data is stored in the HSS and downloaded to the S-CSCF when the user is registered. The user's subscription data includes initial filter criteria (initial filter criteria, IFC) of the user and address information of an AS for providing a service. The service data is downloaded from the HSS to an AS when the user is registered, so that the AS completes a user service processing.

As shown in FIG. 1, when the calling UE initiates an audio/video call to the called UE, the calling UE may send a call invite (invite) message to the S-CSCF by using the P-CSCF. The S-CSCF may download an IFC message statically pre-configured for the calling UE from the HSS, and determine, based on an IFC trigger mechanism, which supplementary service is triggered by the current call, so that a corresponding AS provides the supplementary service.

With reference to the foregoing analysis, the basic architecture of the existing IMS has the following characteristics:

(1) Based on the existing IMS system architecture, a total of more than 20 MMTEL services are provided as a whole (in other words, the plurality of ASs in FIG. 1 are provided as a whole), to provide mainly interaction between the plurality of supplementary services. The S-CSCF needs to have a management capability over all of the more than 20 services.

(2) An IFC-based call invite first-message trigger mechanism triggers one or more ASs. Generally, a static pre-configuration manner is used, and a static pre-configuration is provisioned and implemented by an operator's business support system (business support system, BSS).

(3) The MMTEL services are usually provided by an operator, that is, the MMTEL services are provided by a home network, and the services need to be processed in the home network to maintain consistency of the services.

(4) The existing architecture provides an externally open interface that is based on an application programming interface (application programming interface, API).

One of main requirements on VoNR comes from a 2B application. In a future 2B application scenario, a large quantity of service applications are provided by a third party or an enterprise. The existing IMS system architecture can no longer meet a use requirement of a current 2B application scenario, and this is not conducive to rapid deployment of a 2B application. Specifically, the existing IMS architecture has the following limitations:
(1) Based on the existing IMS system architecture, a total of more than 20 MMTEL services are provided as a whole. The S-CSCF needs to have a management capability over all of the more than 20 services. This makes service configuration data of the S-CSCF complex and requires a large quantity of virtual machines in deployment. In a future 2B-oriented industry application, usually only a basic call service is most needed, and about 95% of traffic is irrelevant to a supplementary service. Even if some supplementary services are related, the supplementary services may not belong to the foregoing more than 20 MMTEL services. Therefore, the existing IMS system architecture is not conducive to flexible and rapid deployment of a 2B application.
(2) An operator's BSS provisioning system is needed to use an IFC-based static configuration, resulting in inconvenient deployment of many industry applications. In addition, triggering based on a single Invite point cannot well reflect flexibility of service customization.
(3) The IMS provides a service by using a home network of an operator to which a user belongs. In a future 2B application scenario, a large quantity of service applications are provided by a third party or an enterprise. Therefore, a requirement cannot be met when a service can be processed only in a home network.
(4) It is difficult to meet organization requirements of event sequence-based sequential logic and services based on a simple and isolated API mode. In addition, a one-way integrated mode provided by an API cannot satisfy richer commercial behavior.

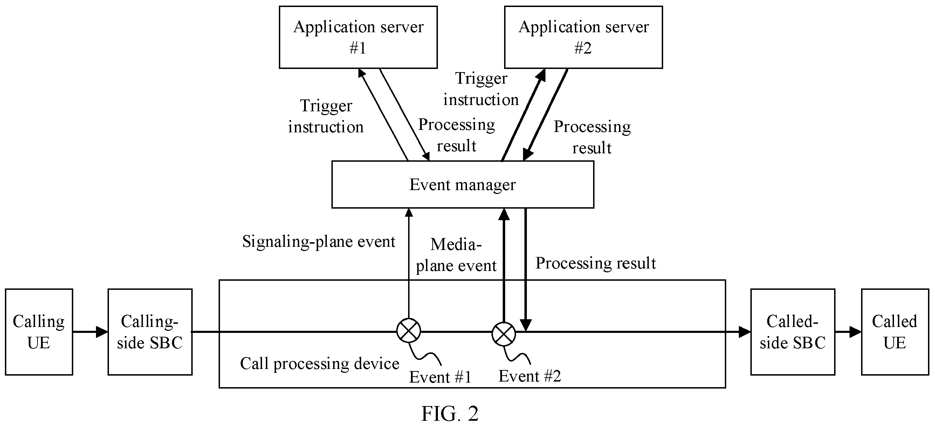

In view of the foregoing problems, the embodiments of this application first provide a call processing system, in which a simplified 2B industry audio/video framework is implemented by decoupling a basic call function as a call processing device. This can meet a use requirement of a current 2B application scenario, so that a 2B application can be rapidly deployed. FIG. 2 is a schematic diagram of a system architecture of an example of a call processing system according to an embodiment of this application.

As shown in FIG. 2, the call processing system provided in this embodiment of this application includes a call processing device and an event manager.

The call processing device is configured to perform a connection and routing processing for a call initiated by calling UE, and is further configured to perform event detection for the call to obtain a detected event set, and report the detected event set to the event manager. The detected event set requests to trigger an update processing for the call.

The event manager is configured to manage the update processing for the call based on the detected event set.

Specifically, in this embodiment of this application, the call processing device and the event manager are disposed independently of each other on different network entities, or they belong to different network entities. For example, the call processing device may be disposed on a network entity in China, and the event manager may be disposed on a network entity in Europe. The call processing device and the event manager can implement network communication.

The call processing device retains a basic call connection and routing capability, and can be configured to perform a connection and routing processing for the call initiated by the calling UE. The call processing device may provide a media connection capability, and provide a capability for organizing service logic and routing logic based on data ownership.

In addition, the call processing device can further perform event detection for the current call to obtain a detected event set, and report the detected event set to the event manager. A type of event is not limited in this application.

For example, the detected event set may be an event of a 2B type. To be specific, the call processing device may detect an event of the 2B type, and report the detected 2B event to a 2B event manager.

For another example, the detected event set may be a to-customer (to-customer, 2C) event. To be specific, the call processing device may detect an event of a 2C type, and report the detected 2C event to a 2C event manager.

In this embodiment of this application, the call processing device can further perform event detection for the current call to obtain a detected event set, and report the detected event set to the event manager. Performing event detection for the current call may be detecting an event in any process of the call, or may be detecting an event related to the current call after the current call is completed.

For example, the detection may be performed before basic call setup is completed, or may be performed between completion of basic call setup and notifying called UE to ring, or may be performed during the call, or may be performed after completion (on-hook) of the call. This is not limited in this application.

Optionally, the detected event set may include a signaling-plane event and/or a media-plane event. In other words, the call processing device can further perform signaling-plane event detection and/or media-plane event detection for the current call. How the call processing device detects an event is not limited in this embodiment of this application.

For example, for the signaling-plane event detection, the call processing device may determine, by detecting reception or transmission of a specific piece of signaling, that an event is detected.

For another example, for the media-plane event detection, the call processing device may determine, by detecting a specific piece of media information, that an event is detected.

For another example, the call processing device may determine, by using a change of a call status, that an event is detected.

In this embodiment of this application, the detected event set requests to trigger the update processing for the call. Specifically, "the update processing for the call" in the embodiments of this application may be understood as performing an update (update) to a service that is based on a status or a processing procedure of the call, or performing an update to a session of the call. Herein, the update processing is a processing other than the connection and routing processing. Therefore, in this application, "request to trigger the update processing for the call" may also be understood as "request to trigger a supplementary service for the call" in some cases.

For example, the update processing for the call may include at least one of number display modification, call direction modification, media path modification, media encoding/decoding type modification, and the like.

Optionally, the update processing for the call may be a single update processing, or may be plural update processings. That is, triggering of a single update processing or plural update processings for the call may be requested based on the detected event set.

Optionally, triggering of a single update processing may be requested by one event.

Optionally, triggering of a single update processing may be requested by a plurality of events.

After detecting an event set, the call processing device may report the detected event set to the event manager. A type of interface used for reporting is not limited in this application. The call processing device may report a signaling-plane event and a media-plane event through a same interface or different interfaces.

Optionally, the detected event set may be reported through a SIP interface.

Optionally, the detected event set may be reported through a non-SIP (Non-SIP) interface.

For example, the call processing device may report a detected signaling-plane event to the event manager through an event report interface 1 (an interface EventReportInt1). The call processing device may report a detected media-plane event to the event manager through an event report interface 2 (an interface EventReportInt2).

Further, the event manager is configured to receive the detected event set, and based on the detected event set, manage the update processing for the call, for example, triggering an update processing, preventing an update processing from being triggered (or blocking an update processing), determining an application server for providing a service for an update processing, providing queue management for plural update processings, and the like. This is not limited in this application.

According to the call processing system provided in this embodiment of this application, the call processing device retains a "minimum core" of a basic audio/video call function, and can be configured to perform a connection and routing processing for the call initiated by the calling UE. In addition, the call processing device is further configured to perform event detection for the call to obtain a detected event set, and report the detected event set to the event manager, so that the event manager manages the corresponding update processing.

According to the call processing system provided in this embodiment of this application, a use requirement of a current 2B application scenario can be met, so that a 2B application can be rapidly deployed. Specifically, in this application, the basic call "minimum core" is separated and used as the call processing device to implement a simplified audio/video framework for the 2B industry. In this way, a 2B application can be rapidly deployed, thereby saving an unnecessary virtual machine and also enhancing a security capability by using zero data configuration. In this application, a trigger mechanism is used for the update processing for the call. In addition, the event manager manages the related update processing, so that a basic call is directly provided by the call processing device without triggering. In this way, occupancy and overheads of supplementary service resources are reduced by 95%, deployment flexibility and a rapid deployment capability are improved, and energy consumption is reduced.

Optionally, in this embodiment of this application, the call processing device supports flexible definition of a signaling-plane event and a media-plane event. Specifically, the call processing device may obtain definition information of an event, and detect the event based on the definition information.

For example, the call processing device may belong to a network operator, and the event detected by the call processing device may be defined by the network operator.

Besides a basic audio/video call management capability, based on a certain requirement, the call processing device may optionally further retain a management capability that is for an MMTEL service and that is frequently used in at least one other 2B scenario. In other words, the call processing device can be configured to perform at least one of other processings in addition to the call connection and routing processing for the call initiated by the calling UE. This is not limited in this application.

In this embodiment of this application, the event manager is configured to manage the corresponding update processing. The following further describes how the event manager manages the update processing.

Optionally, the update processing may be triggered by the event manager. In this case, the event manager is specifically configured to determine, based on the detected event set reported by the call processing device, a third-party application server for providing a service for the update processing.

Specifically, the detected event set can be used to request to trigger the update processing for the call. After determining to trigger the update processing, the event manager may determine the application server for providing the service for the update processing. In this case, the event manager may report a trigger instruction to the application server. The trigger instruction includes a parameter set related to the detected event set.

Optionally, the application server may be a third-party application server deployed by an enterprise (such as an enterprise in the food delivery or taxi industry).

Optionally, the application server may be an MMTEL server deployed by an operator.

As a specific example, in FIG. 2, the call processing device detects an event #1, which is a signaling-plane event. In this case, the call processing device may report the event #1 to the event manager through an interface EventReportInt1. The event manager determines that update processing #1 that the event #1 requests to trigger can be triggered, and then may determine that an application server #1 provides a service for the update processing #1 (for example, number display modification). In this case, the event manager may report a trigger instruction to the application server #1. The trigger instruction includes a parameter set related to the event #1. The application server #1 may be deployed by an enterprise, such as a food delivery enterprise or a taxi enterprise. In another embodiment, the application server #1 may alternatively be provided by a network operator.

In this embodiment of this application, the event manager may determine, based on the detected event set, which update processing(s) are requested to be triggered. In this case, the application server for providing the service may be selected based on any control logic. This is not limited in this application.

As a possible implementation, in this embodiment of this application, the event manager can provide an event subscription management mechanism. In this case, the event manager may obtain information about a subscription relationship. The information about a subscription relationship reflects a correspondence between an event and a server that subscribes to the event. The event manager may determine, based on the detected event set and the subscription relationship, the application server for providing the service for the update processing.

Specifically, the subscription relationship can reflect which application server has subscribed to a specific event, and can reflect a correspondence between an event and an application server. Optionally, the subscription relationship may be defined by an enterprise and stored locally.

The event manager can determine, based on the detected event set and the subscription relationship, which ASs have (or which AS has) subscribed to the detected event set, and determine one or more ASs therefrom to provide the service for the update processing.

Optionally, if the event manager finds, by querying the subscription relationship, that only one AS has subscribed to the detected event set, the event manager may select the unique AS to provide the service for the update processing.

Optionally, if the event manager finds, by querying the subscription relationship, that a plurality of ASs have subscribed to the detected event set, the event manager may select one or more ASs therefrom to provide the service for the update processing.

For example, an AS with a highest priority may be selected to provide the service for the update processing.

As a specific example, if the event manager determines that an update processing that an event requests to trigger is monitoring, and the event manager finds by query that a plurality of ASs have subscribed to the detected event set, the event manager may select, based on a local control policy, a more secure AS server deployed by a government to provide a monitoring service.

Optionally, in another embodiment, if the event manager finds, by querying the subscription relationship, that no AS has subscribed to the detected event set, the event manager may choose not to trigger the update processing in this case.

As a specific example, in FIG. 2, the event manager receives the event #1, and determines, based on the subscription relationship, that the application server #1 has subscribed to the detected event set. In this case, the event manager may determine that the application server #1 provides the service for the update processing #1.

Optionally, triggering of a single update processing may alternatively be requested by a plurality of events. In this case, the application server for providing the service for the update processing may be determined by using a logical combination of the plurality of events and the information about a subscription relationship.

Specifically, an AS (denoted as AS #a) may subscribe to a plurality of events, for example, subscribe to events #1, #3, and #4. The events #1, #3, and #4 are jointly used to request to trigger a specific update processing (denoted as an update processing #a) for a call. In this case, when the event manager determines that the detected event set includes the events #1, #3, and #4, and queries the information about a subscription relationship, the event manager can determine that the AS #a provides a service for the update processing #a for the current call.

In conclusion, based on an existing IMS framework, this application further provides a more flexible service trigger mechanism, to break through a limitation that only IFC Invite is based on a static service provisioning mechanism in an existing IMS, so that a third-party application server can randomly define its own service without using an operator's BSS provisioning system, and event processing logic is decoupled, thereby ensuring independence and flexibility of a third-party application server for 2B. Event subscription and service logic belong entirely to an enterprise itself, ensuring privacy and security of enterprise data and services.

According to this embodiment of this application, the more flexible loosely-coupled trigger mechanism is provided to facilitate service definition by an industry enterprise and flexible plug-in and plug-out; and the multi-event management trigger mechanism is further provided, so that various signaling and media events except Invite can be flexibly programmed and customized to eliminate a limitation of static subscription and change static IFC subscription to flexible subscription-based triggering of events, including signaling events and media events, thereby facilitating rapid and flexible deployment of a 2B application.

Optionally, the event manager in this application may further provide a queue management mechanism, to perform queue management on a plurality of reported events.

Specifically, the event manager may perform queue management on the plurality of events based on the detected event set and a locally stored queue management policy (for example, the queue management policy includes priority information of each event), so as to further perform queue management on plural update processings that the plurality of events request to trigger.

Optionally, the event manager in this application may further provide an event blocking mechanism, to perform blocking management on the detected event set.

Specifically, a blocking operation may be performed on the detected event set based on a locally stored blocking policy. For example, a certain event may be blocked so that no update processing that the certain event requests to trigger is triggered, that is, a trigger instruction may not be reported to the application server in this case.

As a specific example, in FIG. 2, the event manager receives an event #2 (the event #2 is a media-plane event and is reported to the event manager through an interface EventReportInt2). If the event manager determines, based on the locally stored blocking policy (for example, there is a blocked-event list), that an update processing (for example, monitoring) that the event #2 requests to trigger is not allowed, the event manager may choose to block the event #2 so that (a trigger instruction of) the event #2 is not reported to a corresponding application server.

A type of interface used for reporting a trigger instruction is not limited in this application. The event manager may report a signaling-plane event and a media-plane event to an application server through a same interface or different interfaces.

Optionally, the trigger instruction may be reported through a SIP interface.

Optionally, the trigger instruction may be reported through a Non-SIP interface.

For example, the event manager may trigger a signaling operation to an application server through an event trigger interface 1 (an interface EventTriggerInt1). The event manager may trigger a media operation to an application server through an event trigger interface 2 (an interface EventTriggerInt2).

Further, the call processing system provided in this application may further include an application server, which may be provided by a third party such as an enterprise, or may be provided by an operator.

The application server generates a corresponding processing result based on the trigger instruction reported by the event manager. The processing result may be first sent to the event manager. The event manager can manage the processing result, and then forward the processing result to the call processing device. The call processing device performs the update processing for the call.

Managing the processing result by the event manager in this embodiment of this application may be reviewing the processing result to determine whether the processing result meets a requirement, and when the requirement is met, forwarding the processing result to the call processing device to trigger the corresponding update processing. If it is determined that the requirement is not met (that is, the processing result is improper), the processing result may not be forwarded to the call processing device in this case, to block the update processing (or prevent the update processing from being triggered).

Optionally, the processing result may be a "direct" result (for example, for number display modification, the result may be directly a modified number), or may be an invoking interface API or an executable script. This is not limited in this application.

Further, after receiving the processing result, the call processing device may perform the corresponding update processing. Optionally, the call processing device may perform the update processing for the current call by using an in-call modification (in-call-modify) method and/or a re-invite (re-invite) method.

Further, to improve commonality of the call processing device, the call processing device provided in this application can support both an IP-based routing mechanism and an ID-based routing mechanism, to facilitate expansion of various types of third-party applications (application, APPs). In this case, a call invite message obtained by the call processing device may include a first identifier (identifier, ID), a first internet protocol (internet protocol, IP) address, a second ID, and a second IP address. The first ID is an ID of the calling UE, the first IP address is an IP address of the calling UE, the second ID is an ID of the called UE, and the second IP address is an IP address of the called UE. The call processing device may choose to perform routing by using an IP address or an ID based on a requirement. In this way, the call processing system in this application can provide services for different types of user equipment.

Further, based on a specific control policy of a data owner of the calling UE (for example, an HSS of the calling UE), the first ID may be a real ID or an anonymous ID of the calling UE, and the first IP address may be a real IP address or an anonymous IP address of the calling UE.

Similarly, based on a specific control policy of a data owner of the called UE (for example, an HSS of the called UE), the second ID may be a real ID or an anonymous ID of the called UE, and the second IP address may be a real IP address or an anonymous IP address of the called UE.

It can be understood that, the called UE may be in a roaming state, and therefore the called UE may have two data owners. For example, an HSS of a home network of the called UE is a data owner of the ID, and an HSS of a visited network of the called UE is a data owner of the IP address.

As shown in FIG. 2, the call processing system provided in this application further includes a session border controller (session border controller, SBC). The SBC is usually located between two service provider networks in a peer-to-peer environment, or between an access network and a backbone network, so as to provide a service for an individual or enterprise customer. The networks provide various functions to enable or enhance SIP session-based multimedia services. In some cases, the SBC can also be configured to implement some or all of the functions of the foregoing P-CSCF. In some cases, a P-CSCF can also be configured to replace the SBC in this application.

The call processing system provided in this embodiment of this application further includes a calling-side SBC and a called-side SBC. The calling-side SBC is configured to transfer signaling between the calling UE and the call processing device. The called-side SBC is configured to transfer signaling between the call processing device and the called UE.

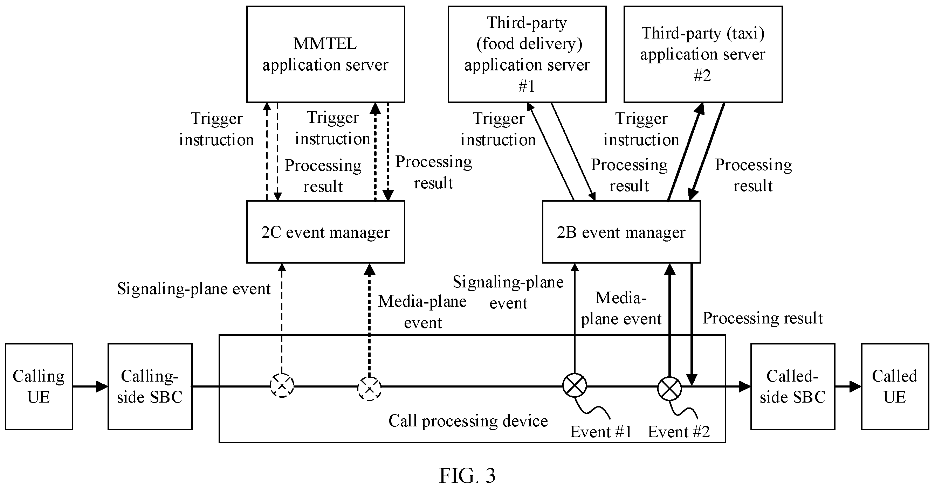

FIG. 3 is a schematic diagram of a system architecture of another example of a call processing system according to an embodiment of this application.

Compared with the foregoing embodiment, a main difference of the solution provided in this embodiment of this application lies in the following: Two event managers are provided for a same call processing device, and the two event managers are respectively configured to manage different types of events. For example, one event manager is configured to manage a 2B event and the other is configured to manage a 2C event. In the following descriptions, the event manager configured to manage a 2B event is referred to as a 2B event manager, and the event manager configured to manage a 2C event is referred to as a 2C event manager.

Specifically, the call processing system provided in this embodiment includes the call processing device, the 2B event manager, and the 2C event manager. The call processing device can detect a 2B event and a 2C event, and report the detected 2B event to the 2B event manager and report the detected 2C event to the 2C event manager.

Similarly, the call processing device may detect a signaling-plane event and a media-plane event in 2B events, and may also detect a signaling-plane event and a media-plane event in 2C events. The detected events are reported to their respective event managers through corresponding interfaces.

For example, the call processing device may report a detected 2B event to the 2B event manager. The 2B event manager manages a corresponding update processing. For example, the 2B event manager may report a trigger instruction to a corresponding third-party application server. The third-party application server may be deployed by a third party such as an enterprise. Because 2B service data belongs to an enterprise itself, the 2B service data is owned by the enterprise's own third-party application server.

For another example, the call processing device may report a detected 2C event to the 2C event manager. The 2C event manager manages a corresponding update processing. For example, the 2C event manager may report a trigger instruction to a corresponding MMTEL server. The MMTEL server is deployed by a network operator. Because 2C service data belongs to an operator, the 2C service data can only be stored on a server that is deployed by the operator or an HSS.

With reference to the foregoing analysis, the embodiments of this application further provide a call processing method. The method may be applied to the call processing system provided in the foregoing embodiments, or may be applied to another system. This is not limited in this application.

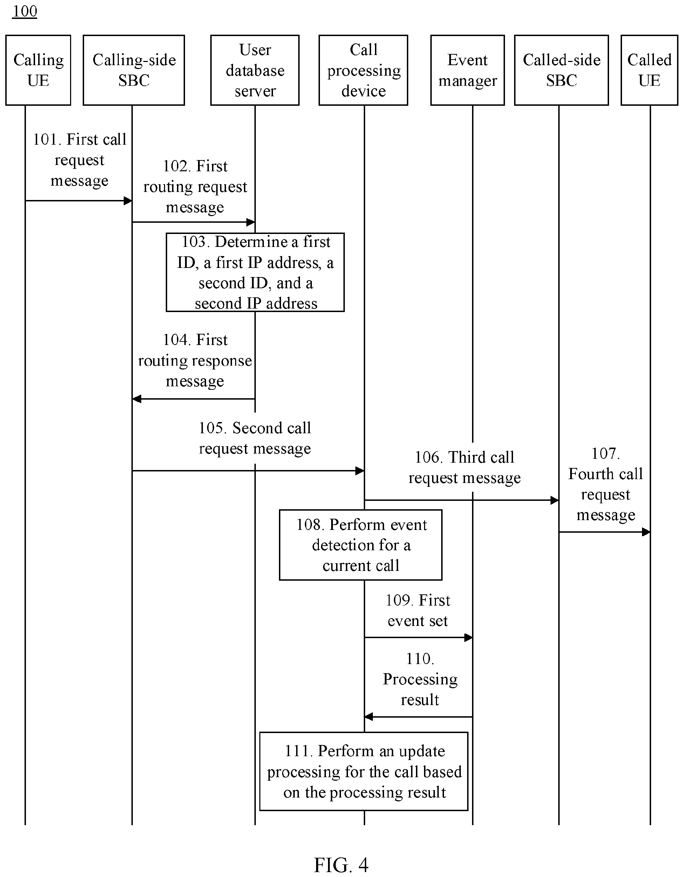

FIG. 4 is a schematic flowchart of a call processing method 100 according to an embodiment of this application. The following describes the call processing method 100 provided in this embodiment of this application with reference to FIG. 4. The method 100 includes the following steps.

Step 101. Calling UE sends a first call request message to a calling-side SBC.

Correspondingly, in step 101, the calling-side SBC receives the first call request message sent by the calling UE.

Step 102. The calling-side SBC sends a routing request message (SearchRoutingInfo, SRI) to a user database server, where the routing request message requests an ID and an IP address of the calling UE and requests an ID and an IP address of called UE.

Correspondingly, in step 102, the user database server receives the routing request message sent by the calling-side SBC.

Step 103. A home subscriber server determines a first ID, a first IP address, a second ID, and a second IP address, where the first ID is the ID of the calling UE, the first IP address is the IP address of the calling UE, the second ID is the ID of the called UE, and the second IP address is the IP address of the called UE.

Step 104. The user database server sends a first routing response message (SearchRoutingInfo response, SRI-Rsp) to the calling-side SBC, where the first routing response message carries the first ID, the first IP address, the second ID, and the second IP address.

Correspondingly, in step 104, the calling-side SBC receives the routing response message sent by the user database server.

Specifically, in this embodiment of this application, the calling UE sends a first call message to the calling-side SBC to initiate a call setup procedure. The first call message may carry real IDs of the calling UE and the called UE.

An ID herein identifies UE. For example, the ID may be a mobile subscriber international ISDN/PSTN number (mobile subscriber international ISDN/PSTN number). Herein, the ISDN is short for integrated services digital network, and the PSTN is short for public switched telephone network.

After receiving the first call message, the calling-side SBC sends a first routing request message to the user database server. The first routing request message requests a route, specifically, used to request the ID and the IP address of the calling UE, and requests the ID and the IP address of the called UE. The first routing request message may carry the real IDs of the calling UE and the called UE.

In step 103, the user database server determines the first ID, the first IP address, the second ID, and the second IP address. In this embodiment of this application, the user database server that serves as a data owner of the foregoing data may determine, based on considerations on aspects such as privacy and security, whether to provide the real IDs and real IP addresses for the calling-side SBC. In other words, the first ID may be the real ID or an anonymous ID of the calling UE, and the first IP address may be the real IP address or an anonymous IP address of the calling UE. Similarly, the second ID may be the real ID or an anonymous ID of the called UE, and the second IP address may be the real IP address or an anonymous IP address of the called UE. The user database server that serves as the data owner may randomly determine whether the first ID, the first IP address, the second ID, and the second IP address are real or anonymous. This is not limited in this application.

Optionally, the user database server may be a home subscriber server (HSS).

For example, the home subscriber server finds that the called UE is in a home domain, where the home domain owns ownership data of the ID and the IP address; and determines that a European Union security rule is complied. In this case, the home subscriber server may determine the real ID of the called UE as the second ID and the real IP address of the called UE as the second IP address, and send the real ID and the real IP address to the calling-side SBC.

Correspondingly, if the home subscriber server determines that the European Union security rule is not complied, the home subscriber server may perform an anonymization processing on the ID and the IP address of the called UE based on a predetermined policy, and send the anonymized ID to the calling-side SBC.

This application sets no limitation on how the anonymization processing is performed on the ID and the IP address. The home subscriber server may perform the anonymization processing based on the predetermined policy (algorithm), for example, may add a temporary extended random number to an IP address of a called-side SBC as the second IP address.

For another example, if the called UE is an intelligent device in an internet of things (internet of things, IoT) scenario, a risk of exposing the ID and the IP address of the calling UE does not exist. In this case, the real ID and the real IP address of the calling user may be determined as the first ID and the first IP address, and be returned to the calling-side SBC.

It can be understood that, in this embodiment of this application, data ownership over the ID and the IP address of the calling UE and that over the ID and the IP address of the called UE may belong to a plurality of different home subscriber servers. The plurality of home subscriber servers may need to jointly determine the first ID, the first IP address, the second ID, and the second IP address. In other words, the "user database server" in "the user database server determines the first ID, the first IP address, the second ID, and the second IP address" in step 103 may refer to a plurality of HSSs. The plurality of HSSs may be considered as a distributed whole.

For example, the user database server may include an HSS (denoted as an HSS #1) in a home network of the calling UE and an HSS (denoted as an HSS #2) in a home network of the called UE. In this case, the HSS #1 has the data ownership over the ID and the IP address of the calling UE, and the HSS #2 has the data ownership over the ID and the IP address of the called UE.

For another example, the user database server may include an HSS #3 in addition to the HSS #1 and the HSS #2. The HSS #3 is an HSS in a visited network of the called UE. In this case, the HSS #1 has the data ownership over the ID and the IP address of the calling UE, the HSS #2 has data ownership over the ID of the called UE, and the HSS #3 has data ownership over the IP address of the called UE.

In step 104, the user database server sends the first routing response message to the calling-side SBC. The first routing response message carries the first ID, the first IP address, the second ID, and the second IP address.

Optionally, the first routing response message may refer to only one message. In this case, the first ID, the first IP address, the second ID, and the second IP address are sent to the calling-side SBC by using the only one message.

Optionally, the first routing response message may alternatively include (refer to) a plurality of messages. In this case, the first ID, the first IP address, the second ID, and the second IP address may be sent to the calling-side SBC by using the plurality of messages. This is not limited in this application.

Further, with reference to the foregoing analysis, the user database server may include a plurality of HSSs. In this case, the plurality of messages may be sent to the calling-side SBC by a same HSS or different HSSs. This is not limited in this application.

Correspondingly, in step 101, the first call request message may refer to only one message. In this case, all of the IDs and the IP addresses of the calling UE and the called UE are requested by using the only one message.

Optionally, the first call request message may alternatively include (refer to) a plurality of messages. In this case, the IDs and the IP addresses of the calling UE and the called UE are requested by using the plurality of messages. This is not limited in this application.

For example, the ID and the IP address of the calling UE may be requested by using one first call request message, and the ID and the IP address of the called UE may be requested by using another first call request message.

When receiving the first routing response message, the calling-side SBC may perform routing based on the first routing response message.

Specifically, the method 100 provided in this embodiment of this application further includes the following step.

Step 105. The calling-side SBC sends a second call request message to a call processing device, where the second call request message carries the first ID, the first IP address, the second ID, and the second IP address.

Correspondingly, in step 105, the call processing device receives the second call request message sent by the calling-side SBC.

Specifically, the second call request message carries the IDs and the IP addresses of the calling UE and the called UE, and the IDs and the IP addresses may be real or anonymous. In this embodiment of this application, hop-by-hop routing based on calling and called numbers in a conventional technology is replaced with IP-based and ID-based routing provided by a data owner, so that user data ownership can be ensured, and the call processing device cannot learn privacy data of a user, thereby protecting user privacy. In addition, a difference based on different operators can be masked, that is, a difference between encoding schemes of the operators can be totally masked, and more general IP-based routing and unified ID-based virtual routing can be used instead. Moreover, a data value of an HSS is also enhanced.

Optionally, the first routing response message further carries first indication information. The first indication information indicates whether the first ID and the second ID are real IDs or anonymous IDs, and indicates whether the first IP address and the second IP address are real IP addresses or anonymous IP addresses.

The first indication information notifies the calling-side SBC whether the IDs and the IP addresses of the calling UE and the called UE are real or anonymous. The calling-side SBC can be prevented from a logic confusion, and routing decision-making by the calling-side SBC can be facilitated.

Optionally, as shown in FIG. 4, the method 100 provided in this embodiment of this application further includes the following steps.

Step 106. The call processing device sends a third call request message to a called-side SBC based on the second ID or the second IP address, where the third call request message carries the first ID, the first IP address, the second ID, and the second IP address.

Correspondingly, in step 106, the called-side SBC receives the third call request message.

Step 107. The called-side SBC sends a fourth call request message to the called UE.

Correspondingly, in step 107, the called UE receives the fourth call request message sent by the called-side SBC.

Specifically, the call processing device may perform routing by selecting the second ID or the second IP address based on a specific situation, and route the third call request message to the called-side SBC. The called-side SBC may continue to send the fourth call request message to the called UE, to perform a next call procedure.

Further, the third call request message carries the first ID, the first IP address, the second ID, and the second IP address to help the called-side SBC in the next routing.

Optionally, the fourth call request message may carry the real ID and the real IP address of the called UE. That is, in this case, the called-side SBC may perform restoration from the anonymous ID and the anonymous IP address of the called UE. This is not limited in this application.

Optionally, the method 100 provided in this embodiment of this application further includes the following steps.

Step 108. The call processing device performs event detection for a current call to obtain a first event set, where the first event set includes at least one event, and the first event set requests to trigger an update processing for the current call.

Step 109. The call processing device sends the first event set to an event manager.

Step 110. The call processing device receives a processing result sent by the manager.

Step 111. The call processing device performs the update processing for the current call based on the processing result.

Specifically, the call processing device may perform event detection for the current call to obtain a detected event set, and report the detected event set (that is, the first event set) to the event manager, so that the event manager manages the corresponding update processing.

In this case, the event manager may report a trigger instruction to an application server. The trigger instruction includes a parameter set related to the detected event set. The application server generates a corresponding processing result based on the trigger instruction reported by the event manager. The processing result may be first sent to the event manager. The event manager can manage the processing result, and then forward the processing result to the call processing device. The call processing device performs the update processing for the call.

For example, the call processing device may perform the update processing for the current call by using an in-call modification method and/or a re-invite method.

The foregoing step 108 to step 111 may be understood by referring to the foregoing content of the related aspects of the call processing system, and details are not described in this application.

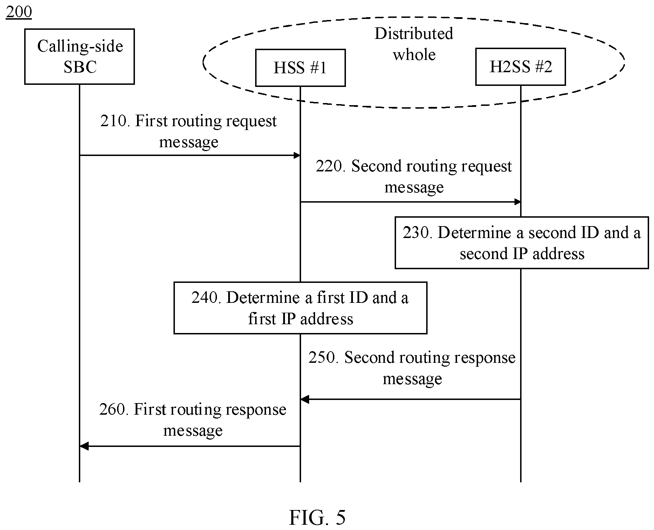

FIG. 5 is a schematic flowchart of a call processing method 200 according to an embodiment of this application. The embodiment shown in FIG. 5 may be considered as a further description of the embodiment shown in FIG. 4. In the embodiment shown in FIG. 5, how signaling is exchanged in a distributed whole formed by a plurality of HSSs is mainly described. In other words, the distributed whole formed by an HSS #1 and an HSS #2 in FIG. 5 may correspond to the user database server shown in FIG. 4.

Some simplification processings are performed on FIG. 5 in this embodiment to highlight a focus. It can be understood that, FIG. 5 may further include other network elements, for example, include the calling UE, the called UE, the call processing device, the event manager, and the called-side SBC in FIG. 4. A procedure of interaction between the foregoing omitted network elements is not shown in FIG. 5.

In the embodiment shown in FIG. 5, no roaming (local breakout) occurs on the called UE. The home subscriber server (HSS) #2 in a home network of the called UE has data ownership over an ID and an IP address of the called UE. The following describes the call processing method 200 provided in this embodiment of this application with reference to FIG. 5. The method 200 includes the following steps.

Step 210. The calling-side SBC sends a first routing request message to the home subscriber server (HSS) #1 in a home network of the calling UE.

Step 220. The HSS #1 sends a second routing request message to the home subscriber server (HSS) #2 in the home network of the called UE, where the second routing request message requests the ID and the IP address of the called UE.

Step 230. The HSS #2 determines a second ID and a second IP address.

Step 240. The HSS #1 determines a first ID and a first IP address.

Step 250. The HSS #2 sends a second routing response message to the HSS #1, where the second routing response message carries the second ID and the second IP address.

Step 260. The HSS #1 sends a first routing response message to the calling-side SBC.

In this embodiment of this application, the first routing request message and the first routing response message may be understood by referring to the first routing request message and the first routing response message in the foregoing method 100, and steps 210 and 260 may be respectively understood by referring to steps 101 and 104 in the method 100. A difference is described herein.

Specifically, after receiving a first call message sent by the calling UE, the calling-side SBC sends the first routing request message to the HSS #1. The first routing request message requests an ID and an IP address of the calling UE, and requests the ID and the IP address of the called UE. The first routing request message may carry real IDs of the calling UE and the called UE.

The HSS #1 sends the second routing request message to the HSS #2. The second routing request message requests the ID and the IP address of the called UE. The second routing request message may carry the real IDs of the calling UE and the called UE.

Optionally, an IP address of the HSS #2 may be obtained by table lookup, and the second routing request message may be further sent to the HSS #2.

Optionally, content of the second routing request message may be the same as that of the first routing request message. In this case, the HSS #1 may play only a "forwarding" function.

After receiving the second routing request message, the HSS #2 determines the second ID and the second IP address. The HSS #2 has the data ownership over the ID and the IP address of the called UE. Therefore, whether to provide the real ID and a real IP address for the calling-side SBC may be determined based on considerations on aspects such as privacy and security. In other words, the second ID may be the real ID or an anonymous ID of the called UE, and the second IP address may be the real IP address or an anonymous IP address of the called UE. The HSS #2 that serves as a data owner may randomly determine whether the second ID and the second IP address are real or anonymous. This is not limited in this application.

After receiving the first routing request message, the HSS #1 determines the first ID and the first IP address. The HSS #1 has data ownership over the ID and the IP address of the calling UE. Therefore, whether to provide the real ID and the real IP address for the calling-side SBC may be determined based on considerations on aspects such as privacy and security. In other words, the first ID may be the real ID or an anonymous ID of the calling UE, and the first IP address may be the real IP address or an anonymous IP address of the calling UE. The HSS #1 that serves as a data owner may randomly determine whether the first ID and the first IP address are real or anonymous. This is not limited in this application.

In step 250, the HSS #2 sends the second routing response message to the HSS #1. The second routing response message carries the second ID and the second IP address.

Optionally, the second routing response message may further include second indication information. The second indication information indicates whether the second ID is a real ID or an anonymous ID, and indicates whether the second IP address is a real IP address or an anonymous IP address.

Optionally, the HSS #1 may store a mapping relationship between the ID and the IP address of the called UE after receiving the second routing response message.

Further, the HSS #1 may include the first ID, the first IP address, the second ID, and the second IP address in the first routing response message, and send the first routing response message to the calling-side SBC.

In this embodiment of this application, there is no logical sequence between step 240 and steps 220, 230, and 250. Therefore, a sequence between step 240 and steps 220, 230, and 250 is not limited in this application.

For example, step 240 may be performed before step 220, or may be performed between step 220 and step 230, or may be performed between step 230 and step 250, or may be performed after step 250.

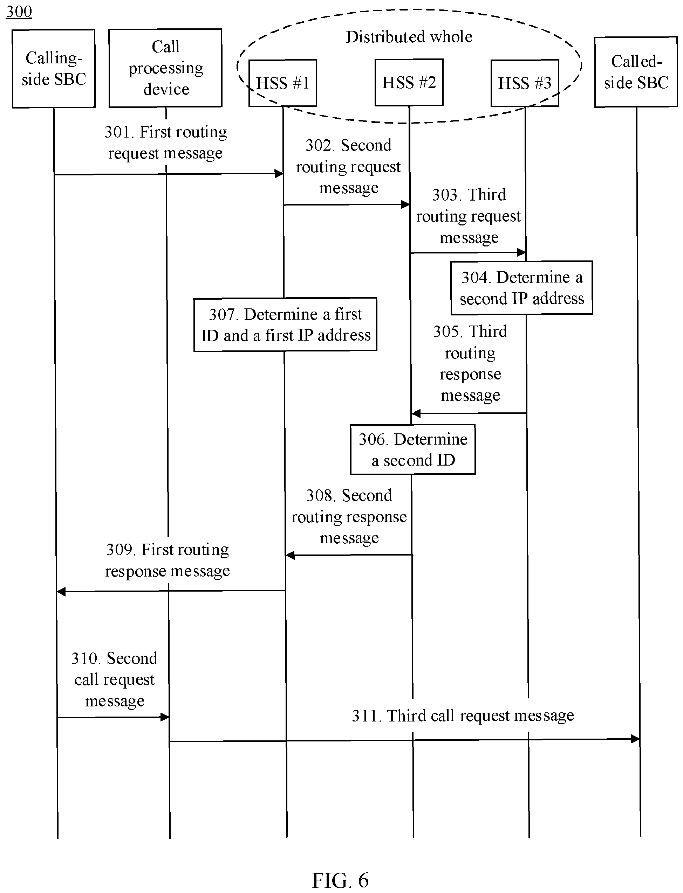

FIG. 6 is a schematic flowchart of a call processing method 300 according to an embodiment of this application. The embodiment shown in FIG. 6 may be considered as a further description of the embodiment shown in FIG. 4. In the embodiment shown in FIG. 6, how signaling is exchanged in a distributed whole formed by a plurality of HSSs is mainly described. In other words, the distributed whole formed by an HSS #1, an HSS #2, and an HSS #3 in FIG. 6 may correspond to the user database server shown in FIG. 4.

Some simplification processings are performed on FIG. 6 in this embodiment to highlight a focus. It can be understood that, FIG. 6 may further include other network elements, for example, include the calling UE, the called UE, and the event manager in FIG. 4. A procedure of interaction between the foregoing omitted network elements is not shown in FIG. 6.

In the embodiment shown in FIG. 6, when roaming occurs on the called UE, the home subscriber server (HSS) #2 in a home network of the called UE has data ownership over an ID of the called UE, and the HSS #3 in a visited network of the called UE has data ownership over an IP address of the called UE. The following describes the call processing method 300 provided in this embodiment of this application with reference to FIG. 6. The method 300 includes the following steps.

Step 301. The calling-side SBC sends a first routing request message to the home subscriber server (HSS) #1 in a home network of the calling UE.

Step 302. The HSS #1 sends a second routing request message to the home subscriber server (HSS) #2 in the home network of the called UE.

Step 303. The HSS #2 determines that the called UE is not in a home domain, and sends a third routing request message to the home subscriber server (HSS) #3 in the visited network of the called UE, where the third routing request message requests the IP address of the called UE.

Step 304. The HSS #3 determines a second IP address.

Step 305. The HSS #3 sends a third routing response message to the HSS #2, where the third routing response message carries the second IP address.

Step 306. The HSS #2 determines a second ID.

Step 307. The HSS #1 determines a first ID and a first IP address.

Step 308. The HSS #2 sends a second routing response message to the HSS #1.

Step 309. The HSS #1 sends a first routing response message to the calling-side SBC.

Step 310. The calling-side SBC sends a second call request message to a call processing device.

In this embodiment of this application, the first routing request message, the first routing response message, the second routing request message, the second routing response message, and the second call request message may be understood by referring to the first routing request message, the first routing response message, the second routing request message, the second routing response message, and the second call request message in the foregoing methods 100 and 200. Steps 301 and 309 may be respectively understood by referring to steps 101 and 104 in the method 100 and steps 210 and 260 in the method 200. Step 310 may be understood by referring to step 105 in the method 100. Steps 302, 307, and 308 may be understood by referring to steps 220, 250, and 240 in the method 200. A difference is described herein.

In step 302, after receiving the second routing request message, the HSS #2 determines that the called UE is not in the home domain, that is, determines that the HSS #2 does not have the data ownership over the IP address of the called UE. In this case, the HSS #2 may send the third routing request message to the home subscriber server (HSS) #3 in the visited network of the called UE. The third routing request message requests the IP address of the called UE.

Optionally, the third routing request message may be a route redirection message (SRI-Redirection).

The HSS #3 determines the second IP address after receiving the third routing request message. The HSS #3 has the data ownership over the IP address of the called UE. Therefore, whether to provide a real IP address for the calling-side SBC may be determined based on considerations on aspects such as privacy and security. In other words, the second IP address may be the real IP address or an anonymous IP address of the called UE. The HSS #3 that serves as a data owner may randomly determine whether the second IP address is real or anonymous. This is not limited in this application.

In step 305, the HSS #3 sends the third routing response message to the HSS #2. The third routing response message carries the second IP address.

Optionally, the third routing response message may be a route redirection response message (SRI-Redirection-Rsp).

Optionally, the third routing response message may carry third indication information. The third indication information indicates whether the second IP address is a real IP address or an anonymous IP address.

In step 308, the HSS #2 determines the second ID because it has only the data ownership over the ID of the called UE. In step 307, the HSS #1 has data ownership over an ID and an IP address of the calling UE, and determines the first ID and the first IP address. For the foregoing determining process, refer to the related descriptions in the method 100 and the method 200. Details are not described herein.

Because steps 304, 306, and 307 are processed by different entities there is no requirement on a logical sequence. Therefore, the sequence of steps 304, 306, and 307 is not limited in this application.

The method 300 provided in this application further includes the following steps.

Step 311. The call processing device sends a third call request message to a called-side SBC.

Step 312. The called-side SBC receives the third call request message sent by the call processing device.

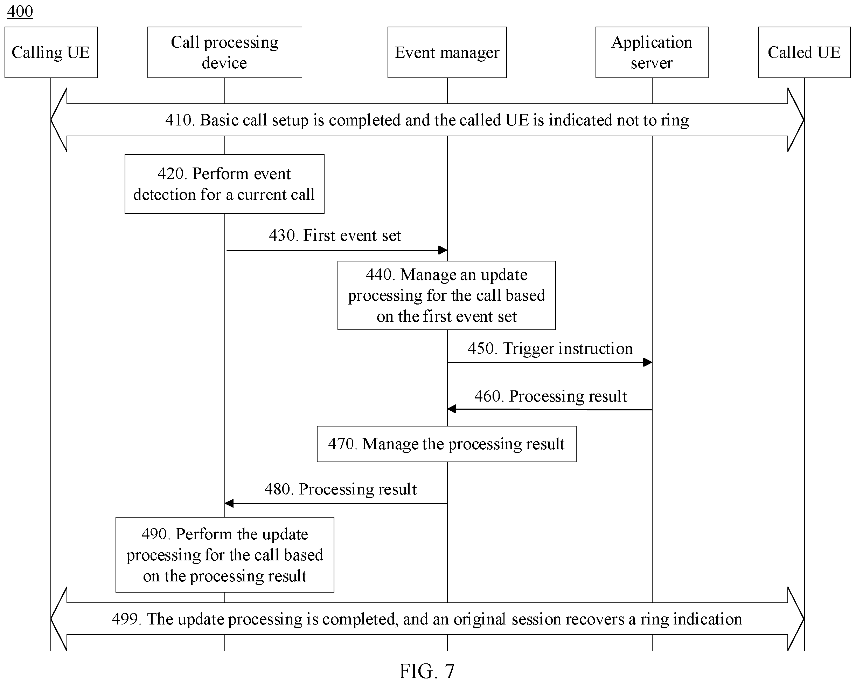

FIG. 7 is a schematic flowchart of a call processing method 400 according to an embodiment of this application. The embodiment shown in FIG. 7 may be considered as a further description of the embodiment shown in FIG. 4. In the embodiment shown in FIG. 7, how a call processing device performs an update processing for a current call is mainly described.

Some simplification processings are performed on FIG. 7 in this embodiment to highlight a focus. It can be understood that, FIG. 7 may further include other network elements, for example, include the calling-side SBC, the called-side SBC, and the home subscriber server in FIG. 4. A procedure of interaction between the foregoing omitted network elements is not shown in FIG. 7. The call processing method 400 provided in this embodiment of this application is described with reference to FIG. 7. The method 400 includes the following steps.

Step 410. Basic call setup is completed and the called UE is indicated not to ring.

Step 420. The call processing device performs event detection for the current call.

Step 430. The call processing device reports a detected first event set to an event manager.

Step 440. The event manager manages the update processing for the current call based on the first event set, and determines an application server for providing a service for the update processing for the current call.

Step 450. The event manager sends a trigger instruction to the application server, and the application server generates a processing result based on the trigger instruction.

Step 460. The application server sends the processing result to the event manager.

Step 470. The event manager manages the processing result, and determines that the processing result meets a requirement.

Step 490. The call processing device performs the update processing for the call based on the processing result.

Step 499. After the update processing is completed, an original session recovers a ring indication.

In this embodiment, an in-call modification process is added on the basis of FIG. 5 and FIG. 6, and an implementation mechanism is an in-call re-invite (re-invite) method.

Specifically, after the basic call setup is completed and the called UE is indicated not to ring (specifically, a 183 message may be received after the basic call is completed, for example, the calling UE receives the 183 message), the call processing device may perform event detection for the current call to obtain a detected event set and report the detected event set (that is, the first event set) to the event manager, so that the event manager manages the corresponding update processing.

In this case, the event manager manages the update processing for the current call based on the first event set, and determines the application server for providing the service for the update processing for the current call. Further, the event manager may report the trigger instruction to the application server. The trigger instruction includes a parameter set related to the detected event set. The application server generates a corresponding processing result based on the trigger instruction reported by the event manager. The processing result may be first sent to the event manager. The event manager can manage the processing result, and after determining that the processing result meets the requirement, forward the processing result to the call processing device. The call processing device performs the update processing for the call.

It can be understood that, the first event set may include only one event. In other words, after detecting one event, the call processing device may immediately report the event to the event manager, and then further complete a procedure of an update processing corresponding to the event.

When a next event is detected, the same procedure may be performed again, that is, before step 499, step 420 to step 490 may be repeated a plurality of times. This is not limited in this application.

The foregoing step 420 to step 490 may be understood by referring to the foregoing content of the related aspects of the call processing system, and details are not described in this application.

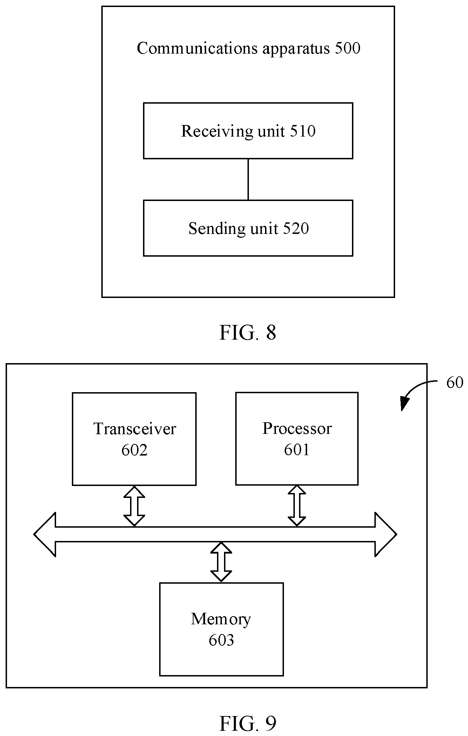

The foregoing describes in detail the call processing method in the embodiments of this application with reference to FIG. 1 to FIG. 7. The following describes in detail a communications apparatus in the embodiments of this application with reference to FIG. 8 to FIG. 10. It can be understood that, the communications apparatus shown in FIG. 8 to FIG. 10 can implement one or more steps in the method procedures shown in FIG. 4 to FIG. 7. To avoid repetition, details are not described herein again.

FIG. 8 is a schematic block diagram of a communications apparatus 500 according to an embodiment of this application. As shown in FIG. 8, the apparatus 500 includes:
a receiving unit 510, configured to receive a first call request message sent by calling user equipment (UE); and
a sending unit 520, configured to send a first routing request message to a user database server, where the first routing request message requests an identifier (ID) and an internet protocol (IP) address of the calling UE, and requests an ID and an IP address of called UE.

The receiving unit 510 is configured to receive a first routing response message sent by the user database server. The first routing response message carries a first ID, a first IP address, a second ID, and a second IP address. The first ID is the ID of the calling UE, the first IP address is the IP address of the calling UE, the second ID is the ID of the called UE, and the second IP address is the IP address of the called UE.

The sending unit 520 is further configured to send a second call request message to a call processing device. The second call request message carries the first ID, the first IP address, the second ID, and the second IP address.

Optionally, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

Optionally, the first routing response message further carries first indication information. The first indication information indicates whether the first ID and the second ID are real IDs or anonymous IDs, and indicates whether the first IP address and the second IP address are real IP addresses or anonymous IP addresses.

Specifically, the communications apparatus 500 may correspond to the calling-side SBC in the call processing methods 100, 200, 300, and 400 according to the embodiments of this application, or a chip configured in the calling-side SBC. The communications apparatus 500 may include units configured to perform the method performed by the calling-side SBC in FIG. 4 to FIG. 7. In addition, the units in the communications apparatus 500 and the foregoing other operations and/or functions are respectively used to implement corresponding procedures of the calling-side SBC in the call processing methods 100, 200, 300, and 400. Specific processes in which the units perform the foregoing corresponding steps are described in detail in the methods 100, 200, 300, and 400. For brevity, details are not described herein.

In a possible implementation, the communications apparatus 500 may be the calling-side SBC. The receiving unit 510 and the sending unit 520 may be a transceiver or a transceiver circuit. Optionally, the transceiver may alternatively be an input/output circuit or an interface.

The communications apparatus 500 may alternatively be a chip. The receiving unit 510 and the sending unit 520 may be an input/output circuit or an interface of the chip.

In a possible implementation, the communications apparatus 500 may be a session border controller, such as a session border controller 60 described below. The functions of the receiving unit 510 and the sending unit 520 may be implemented by a transceiver 602 of the session border controller 60. The following describes a structure of the session border controller 60 in an embodiment of this application with reference to FIG. 9.

FIG. 9 is a schematic diagram of a structure of a session border controller according to an embodiment of this application. As shown FIG. 9, the session border controller 60 includes a processor 601 and the transceiver 602. Optionally, the session border controller 60 further includes a memory 603. The processor 601, the transceiver 602, and the memory 603 communicate with each other by using an internal connection path, to transfer a control signal and/or a data signal. The memory 603 is configured to store a computer program. The processor 601 is configured to invoke the computer program from the memory 603 and run the computer program, to control the transceiver 602 to receive/send a signal.

The processor 601 and the memory 603 may be integrated into one processing apparatus. The processor 601 is configured to execute program code stored in the memory 603, to implement the foregoing functions. During specific implementation, the memory 603 may alternatively be integrated into the processor 601, or may be independent of the processor 601.

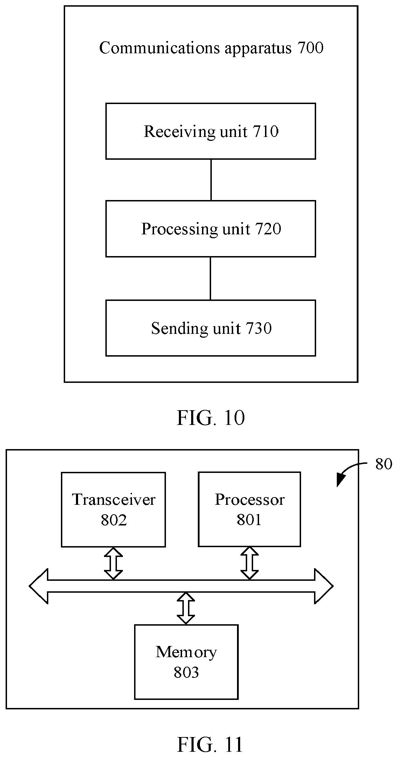

FIG. 10 is a schematic block diagram of a communications apparatus 700 according to an embodiment of this application. As shown in FIG. 10, the apparatus 700 includes a receiving unit 710, a processing unit 720, and a sending unit 730.

The receiving unit 710 is configured to receive a first routing request message sent by a calling-side session border controller (SBC). The first routing request message requests an identifier (ID) and an internet protocol (IP) address of the calling user equipment (UE), and requests an ID and an IP address of called UE.

The processing unit 720 is configured to determine a first ID, a first IP address, a second ID, and a second IP address. The first ID is the ID of the calling UE, the first IP address is the IP address of the calling UE, the second ID is the ID of the called UE, and the second IP address is the IP address of the called UE.

The sending unit 730 is configured to send a first routing response message to the calling-side SBC. The first routing response message carries the first ID, the first IP address, the second ID, and the second IP address.

Optionally, the first ID is a real ID or an anonymous ID of the calling UE, and the first IP address is a real IP address or an anonymous IP address of the calling UE; and the second ID is a real ID or an anonymous ID of the called UE, and the second IP address is a real IP address or an anonymous IP address of the called UE.

Optionally, the first routing response message further carries first indication information. The first indication information indicates whether the first ID and the second ID are real IDs or anonymous IDs, and indicates whether the first IP address and the second IP address are real IP addresses or anonymous IP addresses.

Specifically, the communications apparatus 700 may correspond to the user database server (for example, each home subscriber server (HSS)) in the communications methods 100, 200, 300, and 400 according to the embodiments of this application, or a chip configured in the user database server (for example, a chip in the HSS). The communications apparatus 700 may include the units for performing the method performed by the HSS in the methods 100, 200, 300, and 400. In addition, the units in the communications apparatus 700 and the foregoing other operations and/or functions are respectively used to implement corresponding procedures in the methods 100, 200, 300, and 400. Specific processes in which the units perform the foregoing corresponding steps are described in detail in the methods 100, 200, 300, and 400. For brevity, details are not described herein.

In a possible implementation, the communications apparatus 700 may be a user database server. The receiving unit 710 and the sending unit 730 may be a transceiver or a transceiver circuit. Optionally, the transceiver may alternatively be an input/output circuit or an interface.

The communications apparatus 700 may alternatively be a chip. The receiving unit 710 and the sending unit 730 may be an input/output circuit or an interface of the chip.

In a possible implementation, the communications apparatus 700 may be a user database server (for example, an HSS), for example, a user database server 80 described below. The function of the processing unit 720 may be implemented by a processor 801 of the user database server 80, and the functions of the receiving unit 710 and the sending unit 730 may be implemented by a transceiver 802 of the user database server 80. The following describes a structure of a user database server according to an embodiment of this application with reference to FIG. 11.

FIG. 11 is a schematic diagram of a structure of a user database server according to an embodiment of this application. As shown in FIG. 11, the user database server 80 includes the processor 801 and the transceiver 802. Optionally, the user database server 80 further includes a memory 803. The processor 801, the transceiver 802, and the memory 803 communicate with each other by using an internal connection path, to transfer a control signal and/or a data signal. The memory 803 is configured to store a computer program. The processor 801 is configured to invoke the computer program from the memory 803 and run the computer program, to control the transceiver 802 to receive/send a signal.

The processor 801 and the memory 803 may be integrated into one processing apparatus. The processor 801 is configured to execute program code stored in the memory 803 to implement the foregoing functions. During specific implementation, the memory 803 may alternatively be integrated into the processor 801, or may be independent of the processor 801.

It can be understood that, the processor in embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in embodiments of this application, this application further provides a computer program product. The computer program product includes computer program code. When the computer program code is run on a computer, the computer is enabled to perform the method according to any one of the embodiments shown in FIG. 4 to FIG. 7.

According to the method provided in embodiments of this application, this application further provides a computer-readable medium. The computer-readable medium stores program code. When the program code is run on a computer, the computer is enabled to perform the method according to any one of the embodiments shown in FIG. 4 to FIG. 7.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

For ease of understanding, the following describes terms used in a process of describing the solutions in this application.

In embodiments of this application, the "indication" may include a direct indication and an indirect indication, or may include an explicit indication and an implicit indication. Information indicated by using a piece of information (for example, the "indication information" described above) is referred to as to-be-indicated information. In a specific implementation process, the to-be-indicated information is indicated in a plurality of manners, for example, but not limited to, a manner of directly indicating the to-be-indicated information. For example, the to-be-indicated information is indicated by indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already known or pre-agreed on. For example, specific information may alternatively be indicated by using an arrangement sequence of various pieces of information that is pre-agreed on (for example, specified in a protocol), to reduce indication overheads to some extent.

In embodiments of this application, "first", "second", "third", and various numeric numbers are distinguished merely for ease of description and are not used to limit the scope of embodiments of this application, for example, are used to distinguish between different indication information.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this application, "at least one" refers to one or more, and "a plurality of' refers to two or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the units and algorithm steps in the examples described in the embodiments disclosed in this specification, this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it can be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on an actual requirement to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A call processing system, comprising a call processing device and an event manager, wherein
the call processing device is configured to perform a connection and routing processing for a call initiated by calling user equipment, and is further configured to perform event detection for the call to obtain a detected event set and report the detected event set to the event manager, wherein the detected event set requests to trigger an update processing for the call; and
the event manager is configured to manage the update processing for the call based on the detected event set reported by the call processing device.

2. The system according to claim 1, wherein the event manager is configured to determine, based on the detected event set, an application server for providing a service for the update processing for the call.

3. The system according to claim 2, wherein the event manager is configured to:
obtain information about a subscription relationship between the application server and an event; and
determine, based on the detected event set and the information about the subscription relationship, the application server for providing the service for the update processing for the call.

4. The system according to any one of claims 1 to 3, wherein the event manager is configured to:
perform blocking management on the detected event set based on a locally stored blocking policy.

5. The system according to any one of claims 2 to 4, wherein the event manager is configured to:
generate a trigger instruction based on the detected event set, and send the trigger instruction to the application server;
receive a processing result fed back by the application server, wherein the processing result is generated by the application server based on the trigger instruction; and
manage the processing result.

6. The system according to any one of claims 1 to 5, wherein the call processing device is further configured to:
obtain definition information of an event; and
detect the event based on the definition information.

7. The system according to any one of claims 1 to 6, wherein the call processing device is configured to:
perform the update processing for the call by using an in-call modification method and/or a re-invite method.

8. The system according to any one of claims 1 to 7, wherein the detected event set comprises a plurality of events, and the call processing device is configured to:
perform queue management on the detected event set based on a locally stored queue management policy.

9. The system according to any one of claims 1 to 8, wherein the update processing for the call comprises at least one of the following processings:
number display modification, call direction modification, media path modification, and media encoding/decoding type modification.

10. The system according to any one of claims 1 to 9, wherein the detected event set comprises a media-plane event and/or a signaling-plane event.

11. A call processing method, comprising:
receiving, by a calling-side session border controller (SBC), a first call request message sent by calling user equipment (UE);
sending, by the calling-side SBC, a first routing request message to a user database server, wherein the first routing request message requests an identifier (ID) and an internet protocol (IP) address of the calling UE, and requests an ID and an IP address of called UE;
receiving, by the calling-side SBC, a first routing response message sent by the user database server, wherein the first routing response message carries a first ID, a first IP address, a second ID, and a second IP address, and the first ID is the ID of the calling UE, the first IP address is the IP address of the calling UE, the second ID is the ID of the called UE, and the second IP address is the IP address of the called UE; and
sending, by the calling-side SBC, a second call request message to a call processing device, wherein the second call request message carries the first ID, the first IP address, the second ID, and the second IP address.

12. The method according to claim 11, wherein the first ID is a real ID or an anonymous ID of the calling UE, and the first IP address is a real IP address or an anonymous IP address of the calling UE; and
the second ID is a real ID or an anonymous ID of the called UE, and the second IP address is a real IP address or an anonymous IP address of the called UE.

13. The method according to claim 12, wherein the first routing response message further carries first indication information, wherein the first indication information indicates whether the first ID and the second ID are real IDs or anonymous IDs, and indicates whether the first IP address and the second IP address are real IP addresses or anonymous IP addresses.

14. The method according to any one of claims 11 to 13, wherein the method further comprises:
sending, by the call processing device, a third call request message to a called-side SBC based on the second ID or the second IP address, wherein the third call request message carries the first ID, the first IP address, the second ID, and the second IP address.

15. The method according to any one of claims 11 to 14, wherein the method further comprises:
performing, by the call processing device, event detection for a current call to obtain a first event set, wherein the first event set comprises at least one event, and the first event set requests to trigger an update processing for the call;
sending, by the call processing device, the first event set to an event manager;
receiving, by the call processing device, a processing result sent by the manager; and
performing, by the call processing device, the update processing for the call based on the processing result.

16. A call processing method, comprising:
receiving, by a user database server, a first routing request message sent by a calling-side session border controller (SBC), wherein the first routing request message requests an identifier (ID) and an internet protocol (IP) address of calling user equipment (UE), and requests an ID and an IP address of called UE;
determining, by the user database server, a first ID, a first IP address, a second ID, and a second IP address, wherein the first ID is the ID of the calling UE, the first IP address is the IP address of the calling UE, the second ID is the ID of the called UE, and the second IP address is the IP address of the called UE; and
sending, by the user database server, a first routing response message to the calling-side SBC, wherein the first routing response message carries the first ID, the first IP address, the second ID, and the second IP address.

17. The method according to claim 16, wherein the first ID is a real ID or an anonymous ID of the calling UE, and the first IP address is a real IP address or an anonymous IP address of the calling UE; and
the second ID is a real ID or an anonymous ID of the called UE, and the second IP address is a real IP address or an anonymous IP address of the called UE.

18. The method according to claim 17, wherein the first routing response message further carries first indication information, wherein the first indication information indicates whether the first ID and the second ID are real IDs or anonymous IDs, and indicates whether the first IP address and the second IP address are real IP addresses or anonymous IP addresses.

19. A computer-readable storage medium, wherein the computer-readable storage medium stores a computer program; and when the computer program is run on a computer, the computer is enabled to perform the method according to any one of claims 11 to 18.

20. A chip system, comprising a processor, configured to invoke a computer program from a memory and run the computer program, so that a communication device on which the chip system is installed performs the method according to any one of claims 11 to 18.

21. A communications apparatus, comprising at least one processor, wherein the at least one processor is configured to: be coupled to a memory; and read and execute instructions in the memory, to implement the method according to any one of claims 11 to 18.
